(19) Europäisches Patentamt
European Patent Office
Office européen des brevets

(11) **EP 2 659 963 A1**

(12) **EUROPEAN PATENT APPLICATION**
published in accordance with Art. 153(4) EPC

(43) Date of publication:
**06.11.2013  Bulletin 2013/45**

(51) Int Cl.:
**B01J 20/00** *(2006.01)*  **C01B 3/00** *(2006.01)*
**B01D 53/14** *(2006.01)*

(21) Application number: **10861418.1**

(22) Date of filing: **31.12.2010**

(86) International application number:
**PCT/ES2010/000535**

(87) International publication number:
**WO 2012/089854 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Madroñero De La Cal, Antonio
28007 Madrid (ES)**

(72) Inventor: **Madroñero De La Cal, Antonio
28007 Madrid (ES)**

(54) **STORAGE OF HYDROGEN AND OTHER GASES IN SOLID ABSORBENT MATERIALS TREATED WITH IONIZING RADIATION**

(57)    It is well known that when any gas, mainly hydrogen, is absorbed by a porous solid it is stored in tiny defects present in the material. It is therefore of great interest to irradiate any solid material intended to be used as the absorbent bed of an efficient hydrogen storage material. The irradiation will be made with neutrons or penetrating $\gamma$ radiation, in such a way that this irradiation displaces atoms in the solid material. The effect of these displacements is the generation of the desired defects.

In order to facilitate the entry of hydrogen into the absorbent, which can only occur after adsorption on the material's outer surface, this surface is often pre-treated by an etching with one of the caustic chemicals described herein.

**Figure 2**

**Description**

<u>**Segment of the Technique:**</u> Chemical Industry for production of materials to be used for gas accumulation, especially hydrogen, by means of absorption of the same ones in solid porous.

## I. STATE OF THE ART AND DESCRIPTION OF THE INVENTION

<u>1.1. Scope and objectives. -</u> The economy of hydrogen is the most important possibility to face the current situation of fossil fuel, more expensive and limited every day. The evolution of the hydrogen technology at the present time depends on the development of techniques for the production and use of hydrogen as an affordable cost fuel, and with an acceptable risk level obviously.

From this point of view the foreseen required steps of this new technology are: production, accumulation in hydrogen production stations, storage in manageable tanks, distribution and final use. The most complex to resolve is the hydrogen storage (1).

Hydrogen is the chemical element more abundant in Nature. It's a gas colorless, odorless, flavorless and highly flammable gas. It's also very light; the hydrogen has a density of 89.86 $g \cdot m^{-3}$ in standard conditions.

Its melting point is 14.1 K (K is Kelvin degree, with the equivalence: 1 K = 1 °C + 273) and its boiling point is 20.4 K. As fuel, has a calorific power between 1.20 and $1.41 \cdot 10^8$ $Jkg^{-1}$ (J is the Joule, the energy unit in the International System of Units). Its explosive limit is between 4.0 and 75.0 % (concentration of hydrogen in the air), while its detonation limit is between 18.3 and 59.0% (concentration of hydrogen in the air).

It has an excellent energetic value due to the facility to liberate the energy that involves its combustion giving it to water. A kg. of hydrogen has the calorific power of the equivalent of 2.78 kg of petrol, or 2.80 kg. of kerosene, or 2.40 kg of methane gas.

Liquified to condense its volume, a liter of liquid hydrogen has the equivalent of 0.268 liters of petrol or.0.431 liters of methanol.

The other possibility is to store it in pressurized containers. Taking a baseline for a working high pressure level for the great majority of the potential applications; could be for instance a pressure of 350 bar (1 bar is equivalent to 1.02 $kg \cdot cm^{-2}$, which is equivalent to say that 1.01325 bar are equal to 1 atm), a liter of hydrogen is equivalent to 0.0965 liters of petrol, or 0.127 liters of butane gas, or to 0.191 liters of methanol.

As it can be seen and as an example of the future storing in a deposit container of an automobile, the liquefied hydrogen possibility is not very attractive, especially if we have to keep the fuel at a low temperature below 20 K. The possibility of using it as compressed gas in order to be equivalent energy/weight to the conventional fuels, it demands a so high-pressure level that it supposes an excessive risk in its usage.

The solution is to embed the hydrogen in solids, normally porous, that could take great amounts of gas that are kept inside. When the stored gas is distributed over the whole solid it's said that it's due to an absorption phenomenon, while and when the gas is retained only in the surface of the solid it is called adsorption.

The advantage of using solids with on the surface treatments that increases the porosity of its surface is that a high level of porosity increases its real surface in relation with its geometrical surface, therefore the ability of adsorption for gases.

This is the key of the recent history on the hydrogen storage technology. Absorption is going to be a slow process because it requires the spreading of atoms of gas inside of the bulk of the sample. This occurs with a heat production. This takes place because the kinetic energy due to the movement of the molecules of gas, as they are discharged all over the motionless molecules of the solid witch constitutes the absorber material, it puts to the molecules in state of vibration. Therefore as the solid gets warmer, and as a consequence, it becomes less suitable for further hydrogen absorption.

Let's say that an increase of temperature enhances the deabsorption and deactivate the absorption, while a low temperature produces the opposite effect. Low temperature enhances the absorption, because gas molecules with non rapid movement can transfer very easily their kinetic energy to the molecules of the solid absorber. But in this case of a low temperature the deabsortion is disabled because the gas molecules trapped inside don't get easily the necessary energy to escape out of the solid.

For these reasons, an industrial absorber with a unique temperature for absorption and desorption in accordance with imposed industrial working conditions, it could not have a good temperature for both processes. That means that it will not work in optimal condition for absortion and that the absorbant bed cannot raise temperature enough to have a complete desorbtion. Therefore after a discharge process it will be retained a certain quantity of residual hydrogen, which determines that the storage capability will be diminished. In other words, it is desirable that the hysteresis of the cycle absortion-desorbtion be no significant.

Otherwise the repetition of these circumstances in consecutive charge and discharge processes under industrial use of a hydrogen deposit determines to take place a gradual decline in the storage capacity of the absorbent solid.

Besides this, something remarkable happens when the nature of the phenomena governing the processes of aggregation of ions and disassociation of molecules of hydrogen in the solid is contemplated. There are a series of phenomena that give rise to a physisorption (electrostatic attraction or forces of Van der Waals), and there are chemical interactions between gas molecules and the molecules or functional groups existing in the solid in a way that gives an increase to the processes of chemisorptions. Normally a capture of hydrogen through a physisorption implies a bonding energy minor that in the case of a process of chemisorption.

For example, and for technological advanced materials such as carbon based nanostructures (2), the difficulty to establish a synergy between the possible different mechanisms makes that the amount of hydrogen stored in those advanced materials are some time ago less than expected especially when experimental investigations were not so systematic and profuse.

To get an absorbent to satisfy these requirements it is necessary that the various mechanisms mentioned before are coadjutant in a properly engineered material. This engineering is the target of the present patent.

The strategy that we pursue is to adapt the surface and bulk of the potentially usable solid materials as gas storage beds in order that they could retain great amount of hydrogen in both, surface and bulk.

On the other hand, and with radiation techniques using ionized radiation of high penetration capacity, will make intensive structural damage localized in nanometric size defects in the whole mass of the material. This will make possible that de overabundant hydrogen of the surface will pass to the inside, where it will find its place in the structural defects that were intentionally produced with the radiation.

For that reason, the essential of the method is to achieve that the physisorption of the hydrogen, that normally is limited to the surface of the sample, will be used to inject gas towards the whole of the mass of the solid absorbent. This is possible because during the irradiation has been created nanotunnels that make possible an increase of the solid's active surface.

The accumulated hydrogen of a saturated superficial layer can now be partially transferred to the surface of these inner holes/nanotunnels that works as an additional surface. Therefore the partial dehidrogenation of the external face of the absorbent allows the capture of more hydrogen and can be repeated the hydrogen transfer to the inside of the material until the saturation is reached.

I. 2. Hydrogen storage in the various absorbents.- The US Department of Energy (DOE) has established that, for use in motor vehicles, a hydrogen storage material must be able to store 6% of $H_2$ by weight and must work at temperatures below 120 °C with a reasonable response over various cycles.

Hydrides are the most widely studied alternative [3] due to the fact that many metallic materials, pure metals, alloys and intermetallic compounds reversibly form hydrides upon absorption of hydrogen. In these cases, surface physisorption accounts for only a small amount of the hydrogen retained, with the vast majority being stored inside the material as a result of chemisorption processes.

For example, some Mg alloys are known to be able to store up to 7.6 % of $H_2$ by weight, although they require temperatures of around 300 °C in order to work efficiently.

The most promising alloys in this area include sodium, lithium and potassium alanates, lithium nitrides and lithium, boron and beryllium hydrides, whereas the intermetallic compounds $LaNi_5$, FeTi, TiVCr and MnNiAl should also be highlighted.

In short, metal hydrides are undoubtedly some of the most interesting materials in this field, although much work remains to be done to minimise their drawbacks, such as the fact that their working temperatures are far too high for many applications. Their loading/discharge kinetics also need to be improved, with a much higher number of useful life cycles in repeated use. Furthermore, their not inconsiderable density means that their energy stored/weight ratio is often less favourable than for other types of storage materials.

Organometallic compounds have also received a great deal of attention [4]. These compounds supposedly have a sufficiently large unit cell to be able to host hydrogen. However, the best storage values achieved to date are only in the range of about 2.50 %, in accordance with the fact that hydrogen tends to accumulate in structural defects rather than in the unit cell cavities in the structure. We will come back to this point a little later.

Similar results have been obtained with related materials. For example, sorption studies at 0°C and a pressure of 1.013 bar have shown that zeolites retain only 0.04% of hydrogen by weight [5]. Note that the term "sorption" here refers to both adsorption and absorption.

Another example concerns zirconium phosphate, which after treatment with hypophosphoric acid retains only 0.33% of hydrogen by weight [6].

As these values are much lower than those required for hydrogen technology, it is perhaps of greater interest to illustrate the beneficial effects of additives on absorbents. To this end, and although it concerns the preparation of an absorbent for retaining gaseous oxygen, we will discuss the case of cellulose.

Cellulose can easily be pyrolysed at a temperature of between 300 and 700 °C under an $N_2$ or Ar atmosphere for three hours. Furthermore, it can be impregnated with basic substances such as NaCl, KCl, $LiNO_3$, $NaNO_3$, $KNO_3$, LiOH, NaOH or KOH before pyrolysis [7]. The material obtained upon pyrolysis of conventional cellulose was found to retain 0.61% of oxygen by weight, whereas this value was somewhat higher if the starting material had been pretreated. Indeed, in the best case, impregnation with NaOH was found to result in a retention of 4.57% by weight.

This example introduces the use of carbonaceous materials as gas absorbents. The preparation of such materials by either pyrolysis or by the formation of solids upon chemical decomposition of gases or vapours, normally known as CVD (Chemical Vapour Deposition) processes, allows the opportunity to incorporate additives which are known to improve the gas-absorption and adsorption properties of the resulting materials.

To simply the following discussion, we will describe the key points of the physicochemical processes which govern gas sorption and desorption in carbonaceous materials. Nevertheless, as mentioned above, it is clear that an enormous number of both crystalline and amorphous organic and inorganic compounds, ceramics and pre-ceramics, metals and alloys, polymers and paraffins, after undergoing the treatment described here, can be used as gas-storage materials due to their sorption and desorption characteristics. This is especially true for hydrogen, although it is also the case for gases in general.

I. 3. Sorption and desorption processes in carbonaceous materials.- It is important to understand why treatment with a base improves hydrogen retention. Thus, in a study which involved the pre-treatment of lignin with aqueous solutions of six substances known to be chemically active, namely $K_2CO_3$, $Na_2CO_3$, KOH, NaOH, $ZnCl_2$ and $H_3PO_4$, it was found that pyrolysis of the untreated material at 900 °C resulted in a carbon with a specific surface area (SSA) of 10-50 $m^2 \cdot g^{-1}$. In contrast, pre-treatment with $ZnCl_2$ solution and subsequent pyrolysis at 500 °C resulted in a material with an SSA of 100 $m^2/g$. Likewise, the use of $H_3PO_4$ as a caustic media gave an SSA of 700 $m^2/g$.

Subsequent studies revealed the formation of large numbers of both micro- and macropores. This pore formation was thought to be the result of reactions of the type $K_2CO_3 + 2C \rightarrow 2K + 3CO$, with gas formation.

Defects are of vital importance. Thus, it has been shown experimentally that hydrogen is stored in pores less than $2 \times 10^{-9}$ m in size in activated carbonaceous materials. This is in accordance with the known direct correlation between the micropore volume of a solid and its ability to retain hydrogen. Indeed, it is known that at a pore size of 1 nm [10], the density of the hydrogen stored in the pores is greater than that of liquid hydrogen.

The hydrogen-storage capacity of the material does not reach significant levels if larger pores are formed. Thus, activation of carbon fibres at 1173 K with a flow of $CO_2$, for example, only results in a hydrogen retention of 2.4% by weight [11].

Clearly, as discussed above, this only refers to the hydrogen physisorbed on the surface of the material [2]. As far as the hydrogen stored inside the samples is concerned, it should be noted that the most effective means of improving this aspect is to promote dissociation of the $H_2$ molecule into two protons (H+).

Thus, if tiny clusters of metal atoms, for example Fe, Ni, Co and Pt, which are commonly used as cracking catalysts in crude oil refineries, are present inside the carbonaceous mass, the so-called hydrogen spillover phenomenon occurs in the vicinity of the metal cluster. This process essentially involves a small cluster of metal atoms acting as a catalytic centre [12]. This procedure allows carbons that are able to store up to 21% of hydrogen by weight to be synthesised; this hydrogen is chemisorbed [13].

Finally, another method for increasing the internal hydrogen storage capacity of samples is to insert B or N atoms in their interior as these atoms are closest in size to C, with the former being slightly smaller and the latter slightly larger. As they are very similar in size, they are readily inserted as a substitution impurity, thereby altering the uniformity of the unit cells in their vicinity and creating spaces where hydrogen can be stored.

A good example of the excellent behaviour of boronated carbons as hydrogen-storage materials can be seen in [14], whereas an example of the use of nitrogenated carbons can be found in [15].

Amongst the numerous gases which can be stored in absorbent solids, hydrogen can be considered to be unique as a result of the points discussed above, especially the effect of catalytic centres. For other gases, oxygen is an example, the requirements as regards micropore diameter are much less restraining.

A simple vacuum annealing treatment which allows the formation of micro- and macropores on the surface of some carbon samples is described in [16]. Under these conditions, oxygen adsorption occurs by chemisorption at low pressure but physisorption at high pressure. Irrespective of the pressure, however, oxygen is adsorbed preferentially in the mesopores, and only once these become saturated does it then take place in the micropores, where oxygen fixation is much slower. The base treatment described in the previous section [7] for pyrolysed cellulose-based carbons is therefore effective for oxygen storage as it results in pores with a relatively large diameter.

I. 4. Possible uses of electrical and magnetic fields as coadjuvants in absorbent loading/discharge processes.- As it has already been described that the physisorbed gas molecules on the surface of a solid obey the Van der Waals force model, it would be expected that electrical and magnetic fields should have an effect on gas sorption processes.

Indeed, [17] describes how an increased storage capacity is observed when hydrogen atoms are grouped into aggregates or clusters in the vicinity of a catalytic centre under the effects of an electrical field. In this case a clear influence of the loading pressure, in other words the $H_2$ pressure, in the environment surrounding the material sample from which the absorbent captures the hydrogen, which is subsequently retained, appears to be proven.

Likewise, it has been shown that loading commercial activated carbons at a pressure of 1.6 bar increases the storage capacity by 625%, whereas a pressure of 83 bar only results in a 30% increase [17]. In any event, the improvement in storage capacity increases with the intensity of the electrical field.

A further study with carbonaceous materials [18] has shown that an electrical field of 2.57 x $10^{10}$ V·m$^{-1}$ (an electrical field is measured in volt·m$^{-1}$) weakens the bond energy of an adsorbed H+ on the sample's surface. Thus, this energy was 0.48 eV in the absence of an electrical field but only 0.07 eV when the field was applied. The electron-volt (eV) is a widely used unit of energy in nuclear physics (1 eV = 1.6 x $10^{-19}$ J).

As far as the effect of a magnetic field is concerned, it is known that such fields help water to penetrate the pores of activated carbon fibres, and such an effect is applied in sewage recycling technologies. Under the effects of a field of up to 10 kG, it is observed that the surface pores become singular field points, which brings the molecules closer together and allows them to penetrate the pores in larger numbers [19]. It should be noted at this point that one gauss (G) is equivalent to $10^{-4}$ T, where T represents Tesla, the International System Unit for magnetic flux density.

Very similar findings are observed in gas purification technologies, where it is seen that adsorption of supercritical nitrous oxide by activated carbons at room temperature improves upon application of a magnetic field of 9.6 kG [20]. It should be noted that the effect of the field can be observed for an initial period of around 10 minutes, after which it gradually diminishes.

Hydrogen adsorption has been modelled theoretically [21]. Thus, if we place into a sealed ampoule a sample of porous solid under a gas at pressure $p_o$ and we apply a magnetic field of known strength, the resulting adsorption obeys the following law

$$RT\{\ln(p_o+p) - \ln p_o\} = -\Delta M\ H$$

where R is the constant in the equation of state of a classical ideal gas, T is the temperature in Kelvin degrees, H is the intensity of the magnetic field and $\Delta M$ is the change in magnetisation of the ampoule when 1 mol of absorbate is absorbed by the sample.

I. 5. Advantages of exposing absorbent materials to irradiation with radioisotopes.- We have described above the efficacy of defects, pores, structural alterations, etc. as point concentrators of sorbed gases. It therefore appears logical that any other procedure which can generate small defects in solids should have a beneficial effect on the storage capacity of an absorbent. This should lead to interesting practical applications of the scientific knowledge generated in the field of solid-state physics when studying the interactions between ionising radiation and matter.

The physical irradiation units used below are those commonly found in physics-related texts. Thus, the Gray (Gy), which corresponds to the absorption of 1 Joule by 1 kg of matter, is used as a measure of the irradiation energy absorbed by the matter over a certain time period The unit used for the dose or energy absorbed per unit time is the Gy·s$^{-1}$,

This unit is the correspondent of the former rad, which is defined as an energy of 1 erg absorbed by 1 g of matter. It is therefore clear that 1 Gy is equivalent to $10^4$ rad.

Beginning with the effects of $\beta$ radiation, various studies have shown that the physical parameters of graphite irradiated with $\beta$ radiation at between 90 and 92 kGy remain unaltered after long periods of irradiation. However, a change in their thermoluminescence properties indicates a small surface effect.

The effects of $\gamma$ radiation, which produces notable structural changes throughout the sample rather than simply on the surface, are therefore of greater interest. The structural effects of irradiating a solid can be determined using a classical technique which is widely applied in the field of Materials Science, namely Raman spectroscopy.

When applied to carbonaceous materials, this technique examines the intensity and shape of various highly characteristic peaks in the Raman spectrum of graphite which indicate the structural perfection of the material. These are the so-called G band (2710-2724 cm$^{-1}$) and the D peak (1357 cm$^{-1}$). Any changes to these peaks induced by the $\gamma$ radiation allow us to determine the importance of the damage.

Thus, it can be seen in [23] that irradiation with1 MGy, at a dose of 5.7 kGy/hour, is sufficient to make the graphite vitreous. Likewise, [24] describes how the intensity of the G band is dose-dependent whereas changes to the D peak reflect the amount of point defects accumulated, with this change being proportional to the irradiation in Gy.

In a related study [25], irradiation with 1 MGy at a dose of 8.4 kGy/hour has been shown to twist the crystallographic planes in samples by 10-12° with a translational displacement.

Further possibilities exist as regards the availability of $\gamma$ radiation generators. Thus, in addition to the light radioisotopes commonly used for industrial radiology, there is the possibility to use heavy radioisotopes, which can be extracted from the nuclear waste generated upon disposal of the fuel used in nuclear power reactors.

When nuclear reactors first began to be developed, and due to the fact that $^{238}$U was not fissionable, it was necessary to develop an isotope separation process in order to achieve a uranium source enriched in $^{235}$U, which is fissionable.

Subsequently, plutonium was produced by the reaction:

$$^{238}U(n, \gamma)^{239}U \rightarrow \beta + ^{239}Np \rightarrow \beta + ^{239}Pu$$

Both $^{239}Pu$ and $^{241}Pu$ are fissile plutonium isotopes, in other words elements which can undergo nuclear fission, whereas the even-numbered isotopes ($^{238}Pu$, $^{240}Pu$, and $^{242}Pu$ are fusionable, in other words they can undergo nuclear fusion.

Some nuclear reactors use Pu, whereas others use neptunium (Np).

When activated by neutrons, Pu releases a large amount of energy and emits $\alpha$, $\beta$ and $\gamma$ radiation. Furthermore, $^{241}Pu$ decays to $^{241}Am$, which is a powerful $\gamma$-ray emitter.

I.6. Options for irradiating absorbents with neutrons.- In accordance with the previous paragraph concerning the effects of $\gamma$ radiation, it is now possible to consider the interactions between the neutrons generated in a nuclear reactor and samples of any material which could be used as a solid hydrogen absorbent.

As such neutrons are electrically neutral, they are unaffected by electrical fields. Furthermore, as the neutron is a fermion with spin ½, it interacts only weakly with magnetic fields. Therefore, in light of their large mass, neutrons can be considered to be heavy projectiles in any material at which they are aimed as they are unaffected by any electromagnetic fields which may appear inside said material.

The neutrons formed in nuclear reactors are known as fast neutrons, and these are then passed through a moderator (a light element such as heavy water, polyethylene, which is a polymer containing a large proportion of hydrogen, beryllium and carbon) to reduce their energy.

After being moderated, neutrons can be classified as follows:

| Type of neutron | Energy |
| --- | --- |
| Fast | 100 keV-100 MeV |
| Slow | 1 eV - 100 keV |
| Thermal | 25 meV - 1 eV |
| Cold | $\approx \mu eV$ - $\approx meV$ |
| Ultracold | $\approx neV$ - $\approx peV$ |

Both thermal and cold neutrons have a long associated wavelength, which means that they interact well with matter and experience both dispersion and diffraction phenomena. However, thermal neutrons are the most suitable for absorption, thus meaning that they are also the most suitable for producing damage on the materials [26]. As far as the size of the dose to be applied is concerned, the norm is that there is a neutron flux above which irradiation-induced damage is observed. This flux is $10^{14}$ n/m$^2$ for thermal neutrons and $10^{12}$ n/m$^2$ for fast neutrons.

In Nuclear Physics, when a parallel beam of neutrons moves perpendicular to an imaginary surface, the number of neutrons which occupy a unit area of said surface at any one time is known as the flux. It is measured in terms of $n \cdot m^{-2}$.

After a certain period of time, a sample of material will have been impacted by a number of neutrons equivalent to the flux multiplied by the time. When referenced to the period of time, this number is known as the dose and is measured in $n \cdot m^{-2} \cdot s^{-1}$.

It has been shown in [27] that irradiation results in atomic displacements, which themselves result in interstitial defects and vacancies that can subsequently recombine. This disorganisation process occurs as long as the irradiation is continued until a point is reached when it becomes saturated and further irradiation does not increase the number of defects.

The main effect resulting upon irradiation is an increase in the size of the unit cell along the C axis (graphite has a hexagonal crystal network) and to shorten it along the A axis, thereby resulting in a change in the physical properties.

The effect of this damage can be seen by measuring the changes in the macroscopic physical properties of samples after neutron irradiation. Thus, various studies [28] have investigated the irradiation of samples of graphite in a 5 MW nuclear reactor up to a total exposure of 120 MW-h (total irradiation dose: $3 \times 10^9$ rad). The samples were maintained at 50 °C.

The results of these studies showed that neutron irradiation reduced the thermal conductivity to one eighth of its original value whereas the electrical resistivity doubled. Both these changes could be reversed by up to 80 % by annealing the irradiated samples at 1000 °C for 10 minutes.

Thermal conductivity is measured in terms of watts per metre kelvin (W/m·K) and is defined as the thermal conductivity of an isotropic homogeneous body in which a temperature difference of 1 Kelvin between two parallel planes 1 square metre in size and separated by 1 metre produces a heat flow of 1 watt between them. The unit W/(m·K) can also be expressed as $J \cdot m^{-1} \cdot s^{-1} \cdot K^{-1}$.

Electrical resistivity is defined by evaluating the ratio between the length of an electrical conductor and its cross-sectional area. The coefficient of proportionality between the ohmic resistance and the aforementioned ratio is known as the electrical resistivity and is measured in SI units of $\Omega \cdot m$ (Ohm·metres).

The amount of damage produced by irradiation depends on the temperature. In this respect we should note the experiments undertaken at the International Thermonuclear Experimental Reactor (ITER) [29] using neutron irradiation with energies > 1 MeV and a flux of $8.3 \times 10^{18}$-$7.4 \times 10^{20}$ n/cm$^2$. At these doses, and for the graphite used in the experiment, it was shown that the damage caused by this level of radiation was less than 0.3 dpa (displacements per atom).

In experiments at a constant temperature of 200 °C, it was found that the thermal conductivity was reduced to 9.1% of its pre-irradiation value upon irradiation at a does of 0.02 dpa, whereas irradiation at a dose of 0.25 dpa reduced the thermal conductivity to 2.18% of its initial value. These effects could be reversed by annealing the resulting materials at temperatures of between 1200 and 1600 °C, which restore the crystal perfection of the material.

In similar experiments performed at a temperature of 150 °C. [30], the thermal conductivity was reduced to 25% of its initial value upon irradiation at a dpa of 0.01, whereas it was reduced to 10% of this value upon irradiation at a dpa of 0.1. Further increases in dpa had no effect on the thermal. conductivity.

It is common to use dpa as an indicative parameter in studies concerning irradiation-induced damage as it is representative of both the intensity of the attack (energy and type of projectile particle) and the types of modifications which have occurred in the material upon absorption of the energy used to produce permanent defects. These modifications result in a change of the physicochemical parameters of the target sample as a result of irradiation [31].

The actual mechanism is as follows. Irradiation produces an initial event in which the projectile particle displaces an atom form its original position. This atom then collides with its neighbours, also displacing them from their original positions. The majority of these affected atoms return to their original position within a few picoseconds, thus meaning that only a few atoms are permanently displaced. These latter atoms form a "melted phase" in which their positions do not correspond to those of a crystalline network architecture and are those which absorbed an impact energy above a certain "threshold energy".

The proportion of atoms which become permanently displaced from their original position can be used to numerically express the efficacy of an irradiation process for altering the target, hence the term dpa, displacements per atom.

The idea of using neutron irradiation, in accordance with this model, to increase the number of secondary displacements and therefore possibly improve materials for use as absorbents resulted in several studies performed during the preparation of this invention which remain unpublished. This idea involves incorporating a dopant which is susceptible to undergo a nuclear reaction upon neutron irradiation into the material to be used as an absorbent. These dopants would then act as damage amplifiers as a result of the secondary damage caused by the $\alpha$ particles and $\gamma$ radiation they produce upon neutron irradiation.

This coincides with an analytical technique know as PGNE (Prompt Gamma Ray Emission), which permits the detection and quantification of light elements such as H, B, C, Ni and Si. This consists in capturing neutrons by way of $^{14}$N(n, $\gamma$)$^{15}$N type reactions. Examining the amount of $\gamma$ photons and their energy enables a quantitative evaluation of the elements under analysis.

Consequently, we can take advantage of the fact that the dpa parameter can be used to describe the extent of the damage as the irradiation dose increases by way of a scale expressing various degrees of damage and their equivalent dpa values.

This dpa-based scale is therefore commonly used to compare the damage caused upon irradiation of different materials.

The dpa value for the irradiation of any material can be calculated using a program based on the Monte Carlo method, which simulates the scattering of energetic ions using the Moliére potential. This program determines the distribution of the modifications and the energies of the ions transmitted and backscattered, as well as the distance between collisions [32]. This calculation program, which is freely available on the Internet, is called SRIM-2010 (version 2010.0-10 Mb) and can be downloaded from http://www.srim.org.

Irradiation of a sample with neutrons has a marked effect on the hydrogen placement process in carbonaceous materials. As a result of the unusual size of the irradiation-produced defects, a change occurs in the energy of the bond between the carbon atoms and the hydrogen atoms they sorb. Indeed, it has been shown that that the energy of this bond in nonirradiated graphites is 2.6 eV, whereas irradiation increases the bond energy to 4.4 eV [33].

I.7. Manufacture of carbons which behave as good hydrogen absorbents.-Carbonaceous materials are traditionally manufactured by pyrolysis of bitumens, tars, polymers, etc.

In light of this, the manufacturing process for absorbent carbons will involve the pyrolysis of a product to which has been added an additive containing a chemical element of interest. In this way, the carbonaceous product obtained after the high temperature treatment will contain this additional element.

For example, it has been noted above that B and N are ideal additives for inclusion in carbonaceous networks as replacement atoms. A boronated carbon has been manufactured by pyrolysis of 9-chloroborafluorene [34]. The resulting polymer was stabilised at 375 °C, then carbonised at 550 °C under an argon atmosphere. Finally, it was pyrolysed at a temperature of between 1450 and 2300 °C.

Likewise, a nitrogenated carbon has been prepared from a mixture of quinoline in toluene together with a solution of acrylonitrile and ammonium persulfate as catalyst. Thus, the mixture was heated to 250 °C for half an hour to initiate the polymerisation. The resulting polymer was then carbonised at 520 °C for 3 hours and finally graphitised at 1050 °C. This procedure results in carbons containing 6.5% nitrogen by weight [35].

However, the gas-based deposition method more commonly known as chemical vapour deposition (CVD) is perhaps even more versatile and interesting than pyrolysis. This method involves the use of a gaseous precursor or mixture of such precursors and an inert or carrier gas, which are passed into a chemical reactor under the appropriate conditions of pressure and temperature.

The mixture of gases then reacts to form a solid product and a gaseous residue, which is expelled. The solid product is the intended goal [36].

This process has mainly been described for the electronics industry, where it is used to produce silicon cells for solar energy, semiconductors, etc., although it can also be applied to the manufacture of absorbent materials simply by increasing the supply of secondary elements, which in the electronics industry are used as dopants in the parts per million range but for absorbents are added in the percentage range.

We will base the following discussion on the well-known fact that carbonaceous materials can be obtained by decomposition of a gaseous hydrocarbon, methane, ethylene, acetylene, polyethylene, etc. [37] This reaction is always performed in a reactor at the appropriate temperature into which the hydrocarbon and hydrogen gas are introduced. Furthermore, a flow of gas containing a secondary element of interest, which decomposes together with the hydrocarbon, can also be introduced. This secondary gas can be added to the hydrogen flow or be diluted with an inert gas which is passed into the reactor.

The process described above allows carbons containing B and N similar to those obtained by pyrolysis described in the previous section to be manufactured.

For example, to obtain a boronated carbon from $C_2H_2$ and $BCl_3$ [39], a main flow of $H_2$ together with a flow containing equal amounts of the hydrocarbon and the chloride are passed into the reactor at 1000-1225 °C. In contrast, to obtain the same material from methane, the best method involves preparation of a saturated solution of trimethyl borate in methanol and bubbling hydrogen through this solution [40].

CVD is of particular interest when a metal such as one of those mentioned above (Co, Ni, Ti, etc.) is to be incorporated in order to act as a catalytic centre. Indeed, the information required to incorporate such metals using CVD techniques can readily be found in the literature.

In the case of Ni [41], the decomposition of $Ni(CO_4)$ occurs at temperatures $\geq$ 275 °C and pressures of between 0.1 and 1.0 atm, whereas for Co [42], cobalt acetylacetonate sublimes and begins to decompose in the range 275-310 ° C under a hydrogen atmosphere, thus allowing it to be incorporated into a carbon-generating atmosphere.

Furthermore, it should be noted that the incorporation of carbide-forming metals is also of great interest as the interface between a carbide granule and the carbon host matrix is an excellent region for hydrogen retention. Thus, for example, Si can be incorporated using a mixture of hydrogen and silane ($H_2/SiH_4$ in the range 0.5-2%) at atmospheric pressure and a temperature of between 700 and 1000 °C. Likewise, aluminium can be incorporated by taking advantage of the fact that diisobutylaluminium hydride decomposes at temperatures above 700 °C, thus allowing it to be incorporated into a carbon-generating atmosphere.

I.8. Bibliography

[1] O.A. Rosyid, D. Jablonsky, U. HauptmannsInt. J. Hydrogen Energy (2007);32:3194-3200

[2] G. M. Psofogiannakis G. E. FroudakisJ. Phys. Chem C 2009;113:14908 - 14915

[3] B.Sakintuna, F. L. Lamari-Darkrim, M. HirscherInt. J. Hydrogen Energy 2007; 32:1121 - 1140

[4] J.L.C. Rowsell, O.M. YaghiAngew. Chem. Int. Ed. 2005;44:4670 - 4679

[5] J. Weitkamp, M. Fritz and S. Ernst.Int. J. Hydrogen Energy 1995; 20 (12): 967-970.

[6] E. Brunet, HH.M.H.Alhendawi, C. Cerro, M.J. de la Mata, O. Juanes, J.C. Rodriguez-UrbisAngew. Chem. Int. Ed. 2006; 45:6918 - 6920

[7] N. Miyajima, S. Uchida, T. Suzuki, H. Sakane.Mater Sci Eng B 2008; 148: 249-252.

[8] J. Hayashi, A. Kazehaya, K. Muroyama, A.P. WatkinsonCarbon 2000; 38: 1873-1878.

[9] C.-H. Chen, C.-C. HuangSep Purif Technol 2009;65:305-310.

[10] R. Gadiou, S. E. Saadallah, T. Piquero, P. David, J. Parmentier, C. Vix-GuterIMic. Mes. Mater. 2005; 79:121-128

[11]A. Rejifu, H. Noguchi, T. Ohba, H. Kanoh, F. Rodriguez Reinoso, K. Kaneko Adsorpt Sci Technol 2009; 27(9): 877 - 881

[12] L. Chen, A.,C. Cooper, G. P. Pez, H. ChengJ. Phys. Chem. C 2007; 111: 18995-19000.

[13] C. Liu, Y.Y. Fan, M. Liu, H.T. Cong, H.M. Cheng, M.S. Dresselhaus Science 1999; 286:1127-1129

[14] B. Kuchta, L. Firlej, S. Roszak, P. PfeiferAdsorption 2010; 16:413-421

[15] Y. Ohkawara, S, Ohshio, T. Suzuki, K. Yatsui, H. Ito, H. SaitohJpn. J. Appl. Phys. 2002; 41 (12): 7508-7509

[16] S. A. Dastgheib, T. KaranfilJ Colloid Interface Sci 2004; 274; 1-8

[17] X. Li, J.-Y. Hwang, S. Shi, X. Sun, Z. ZhangCarbon 2010 ;48 :876 -880

[18] W. Liu, Y. H. Zhao, Y. Li, E. J. Lavernia, Q. JiangPhys Chem Chem Phys 2009; 11:9233-9240

[19] S. Ozeki, J. Miyamoto, S. Ono, C. Wakai, T. WatanabeJ. Phys. Chem. 1996; 100:4205 - 4112.

[20] H. Uchiyama, K. Kaneko, S. OzekiLangmuir1992; 8:624 - 629

[21] S. Ozeki, J. Miyamoto, S. OnoMagnetic field effect on water adsorptionChapter in the book: "Fundamentals of Adsorption" (M.D. Le Van, Editor). Published by Public Academic Publishers, Boston, Massachussets, 1996. pg 717-723.

[22] P. Szroeder, A. Chruscinska, K. Przegietka, S. KuleszaEnergy Convers Manage 2008; 49: 2494-2498.

[23] F. CataldoCarbon 2000; 38:634-637.

[24] M. Hulmana, V. Skálaková, S. Roth, H. KuzmanyJ. Appl. Phys. 2005; 98:024311.

[25] D. H. Galván, I. L. Garzón, P. Santiago, M. J. YacamánFull Sci Techn 1998; 6(5):867-883.

[26] S. Pospisil, C. GranjaAIP Conference Proceeding (Nuclear Physics) 2010; 1204:12 - 16.

[27] Virgil'ev, Yu. S., Kalyagina, I. P., Pekal'n T.K., Shrurshakova, T. N.Soviet Atomic Energy 1975; 38(5): 390-395.

[28] R. L. Powell, P. WagnerCarbon 1970; 8: 690-692.

[29] T. Maruyama, M. HarayamaJ. Nucl. Mater. 1992; 195: 44-50.

[30] L. L. Snead, T. D. BurchellJ. Nucl. Mater. 1995; 224: 222-229.

[31] H.L. Heinisch, L.R. Greenwood, W.J. Weber, R.E. WillifordJ. Nucl. Mater. 2004; 327:175-181.

[32] J. P. Biersack y L. G. HaggmarkNucl Instr and Meth 1980; 174:257-269.

[33] H. AtsumiPhy Scr. 2003; T103: 77-80

[34] R. Hu, T. C. ChungCarbon 1996; 34(10):1181-1190.

[35] J. Machnikowski , B. Grzyb, J.V. Weber, E. Frackowiak , J.N. Rouzaud, F. BéguinElectrochim Acta 2004; 49: 423-432.

[36] K.L. ChoyProg Mater Sci 2003; 48: 57-170.

[37] P.W. May, N.M. Everitt, C.G. Trevor, M.N.R. Ashfold, K.N. RosserAppl Surf Sci 1993; 68:299-305.

[38] D.K. Mishra, Jyh-Ming TingDiam Rel Mater. 2008; 17:598-601.

[39] T. Shirasaki , A. Derre , M. Menetrier, A. Tressaud, S. FlandroisCarbon 2000; 38:1461-1467.

[40] R. Erz, W. Dötter, K. Jung, H. EhrhardtDiam Rel Mater 1995; 4:469-472

[41] H. E. Carlton, J. H. OxleyA. I. Ch. E. Journal 1967; 13(1):86-90.

[42] R. G. Charles, P. G. HaverlackJ Inorg Nucl Chem 1969; 31:995-1005.

[43] A. L. Cabrera, J. F. KirnerSurf. Coat. Tech. 1989; 39/40:43-51.

[44] B. J. Wood, A. Sanjurjo, G. T. Tong, S. E. SwiderSurf. Coat. Tech 1991; 49:228-232.

## II. RELATED PATENTS

*Patent1*: A. Feaver, G. Cao. Carbon-based foam nanocomposite hydrogen storage material. No: WO 2007/064942 A1

*Patent2*: S. Lynum, J. Hugdahl, K. Qox, R. Hildrum. Carbon media for storage of hydrogen. No: US 6,773,689 B1

*Patent3*: A. J. Maeland, A. T. Skjeltorp. Hydrogen storage in carbon material. No: US 6,290,753 B1

*Patent4*: W. A. Goddard, W. Q. Deng, X. Xu. Carbon-based compositions for reversible hydrogen storage. No: US20050075245 A1

*Patent5*: K. M. Pavlovych. An explosive "Nikol". No: UA20040807084U/ UA9026(U).

*Patent6*: K. Rudolf, H. Heinz. Multimodal Explosive. No: WO2006/094531(A1)

*Patent7*: J. Winter, D. Mahulikar, F.N. Mandigo. Projectile having improved baseplug. No: US5020439 (A)

*Patent8*: C. A. Yalaha. Explosive/energetic fullerenes. No: US007025840B1,

## III. BRIEF DESCRIPTION OF THE PATENT

The absorption of hydrogen by absorbent solids is a storage method of great interest due to the great difficulties encountered when condensing hydrogen into a liquid or compressing it at very high pressures.

The adsorption process which occurs in solid absorbents can be used to fix a certain amount of highly labile hydrogen on the surface of the material by physisorption, whereas inside the material hydrogen is stored by chemisorption, which results in a higher binding energy. In light of this, and as the hydrogen must diffuse through the large internal region until it can escape via the surface, the gas enters and leaves the bulk much more slowly than the hydrogen bound to the surface.

The present patent describes the possibility of submitting a material to neutron irradiation in a nuclear reactor or to $\gamma$ irradiation in a similar system to those used to radiograph industrial parts using radioisotopes. In both cases the irradiation produces a large number of very small defects with an appropriate size for hydrogen storage. Hydrogen does not readily accumulate in cavities which are too large.

Provided it is sufficiently stable to withstand an irradiation process without collapsing, almost any solid material can be treated in this manner so that it can act as a solid absorbent. Said material can have any geometry and can be a powder, flakes, lamellar, etc. However, it is easiest to manufacture in the form of a thin thread without the need for it to achieve a similar degree of fragmentation to that observed in nanomaterials.

These materials can be manufactured by pyrolysing an organic starting material under a non-oxidising atmosphere or by decantation after decomposition of reagent gases which deposit the desired material as a solid.

In both cases, numerous types of additives with a wide range of purposes, such as catalysts to promote hydrogen ionisation, crystalline network deformers which produce cavities where hydrogen can be stored, radiation effect amplifiers, etc., can be incorporated into the material during manufacture.

It is also of enormous interest to be able to modify the surface of the absorbent in order to provide it with an appropriate degree of porosity to allow it to intensify the physisorption processes required to capture a significant amount of hydrogen on the surface, from where it can diffuse into the material.

Acid-based etching treatments are the most suitable for adapting the surface for hydrogen adsorption. In the case of storage of gases with a higher molecular weight, such as oxygen, treatment with alkaline chemicals is recommended.

Once the surface has been prepared correctly, it is sufficient to place the material under a pressurised hydrogen atmosphere for absorption to begin.

A possible, although not essential, improvement involves loading the hydrogen under a electrical or magnetic field. The absorption process occurs more rapidly in this case.

## IV. EXAMPLE OF EMPLOY OF THE INVENTION

Four examples of potential applications are shown below. They were selected because they are valuable as models to demonstrate the utility of the contributions presented in this document, although it should be noted that none of these applications limits the possibilities which are suggested in this invention report.

First Example: A structure for storing the energy produced by a wind turbine .-Essentially all energy production systems which make use of renewable energy sources require some sort of energy storage system due to the fact that the periods of maximum energy generation do not usually coincide with those of highest consumption.

Using the example of a wind turbine, which as its name suggests uses wind energy to generate electrical energy, the use of this energy to produce hydrogen by the electrolytic decomposition of water could be considered. The question would then arise as to how to store this hydrogen in a reversible storage system.

An interesting possibility would be to use carbonaceous fibres grouped in threads to be stoked in parallel rugs. These fibres would be treated and prepared as described in this invention patent, using a surface etching treatment. During their preparation additives could be included and the fibres could subsequently be irradiated with penetrating radiation.

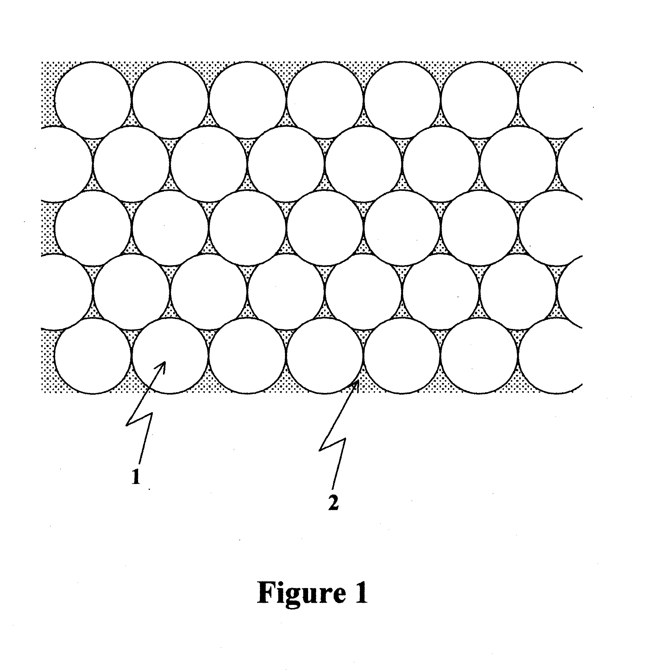

The main advantage of this fibre grouping is that, as a result of their stacking, which is shown in Figure 1, channels are formed between the filaments that facilitate the movement of hydrogen during loading and discharge. This prevents a hydrogen atom released from a crystal defect inside the absorbent material from having to go through a process of diffusion through a large-sized solid to reach the surface. This easy displacement makes a rapid charge and discharge possible. This speed is required for a storage system destined for use as an assistant device for an alternative energy source.

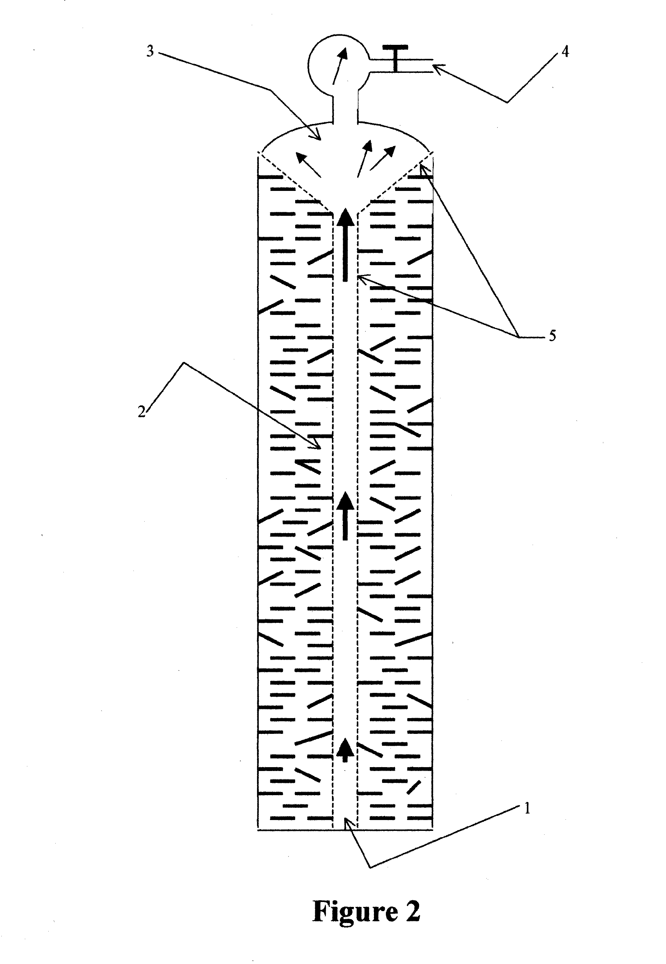

In light of this, the most appropriate design is that shown in Figure 2, which ensures that the hydrogen desorbed reaches the collector channel, from where it arrives in the chamber and subsequently the outside via a pressure reducer in the shortest time possible. This pressure reducer ensures that the hydrogen is delivered at a pressure appropriate for feeding a fuel cell, which produces electrical energy from gaseous hydrogen.

Second Example: Hydrogen storage in paraffin.- Paraffins are a group of hydrocarbon alkanes $C_nH2_{n+2}$ with an n value of between 20 and 40. Their melting point is between 47 and 64 °C. Their interest for hydrogen storage resides in rather more than simply their hydrogen absorption capacity.

Commercially speaking, a paraffin with n=25 is known as a wax. Their high hydrogen content means that they have been used as neutron moderators since the very early days of nuclear technology research. We will concentrate on this aspect in the following discussion.

The wax can easily be maintained at a relatively low temperature by simply cooling with dry ice (solid carbon dioxide), which has a sublimation temperature of -78 °C. It can then be irradiated under these conditions without any undesired heating.

Once the sample has been irradiated, it is submitted to a hydrogen absorption process by simply placing it under an atmosphere of this gas at a reasonable pressure. It can remain unchanged under these conditions at a temperature of between 10 and 20 °C. When the stored hydrogen needs to be released, the wax can simply be melted.

This absorbent is recommended for those cases where hydrogen needs to be stored over the long term, such as large-scale solar energy plants (several megawatts), which need to store energy from midsummer until the following winter.

Third Example Carbonaceous microfibres as propellant enhancers.- A rocket is basically a cylinder of solid propellant consisting of a mixture of fuel and an oxygen source. The combustion gases are expelled via a central nozzle which creates a high-speed flow of combustion gases that propel the rocket. In technical terms, this cylindrical piece of solid propellant is known as the grain.

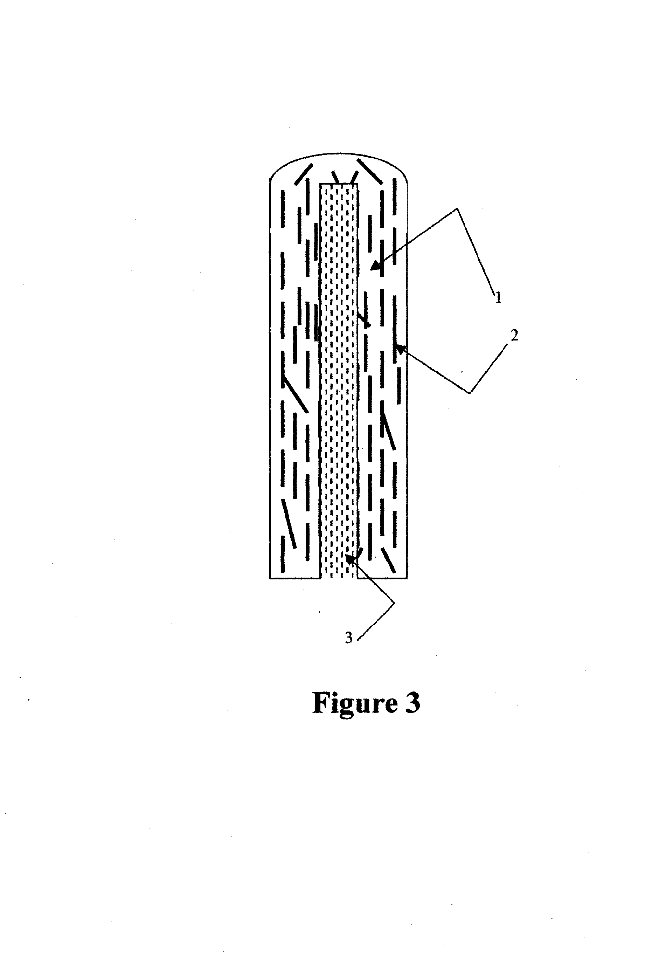

Carbon fibres aligned essentially in parallel can be added to the propellant as an additive, as shown in Figure 3. This would result in a material consisting of a propellant matrix and a unidirectional carbon fibre reinforcement.

From a structural point of view the addition of carbon fibres has numerous advantages. First of all, it increases the mechanical strength of the grain as carbon fibres tend to have a high mechanical resistance. Secondly, it improves the thermal conductivity of the propellant.

Finally, the carbonaceous material releases heat of combustion and the gases which were previously absorbed onto the carbon fibres in situ. All the fibres can be loaded with hydrogen, or some fibres can be loaded with hydrogen and others with oxygen.

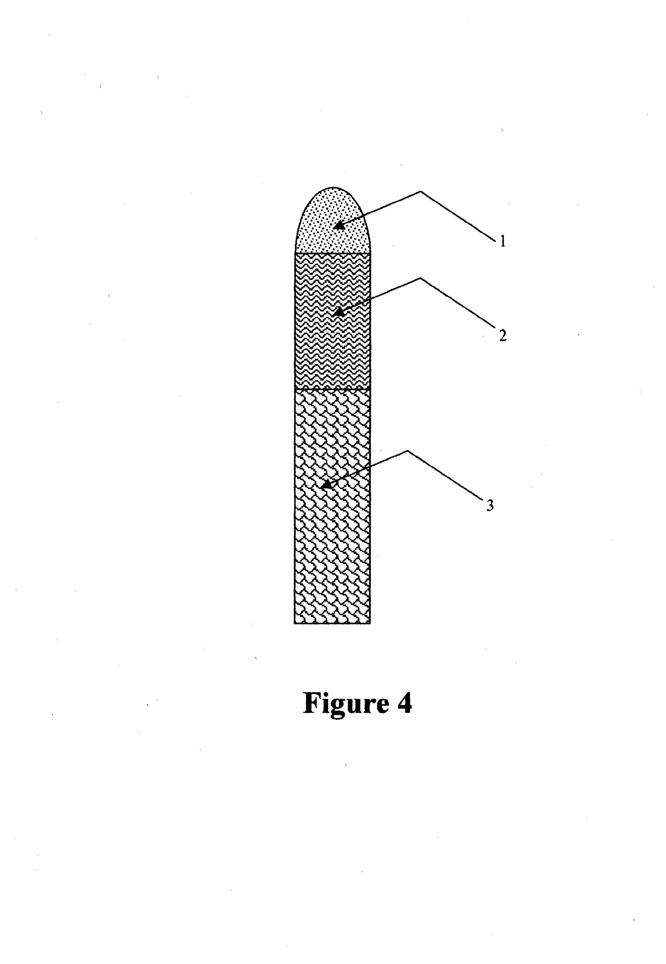

Fourth Example. The use of absorbents in the perforating section of a projectile.- Certain types of missile function with three stages, as shown in Figure 4. Stage 1 can contain an electronic detonator which is activated upon contact. Stage 2 can contain a mixture of solid absorbents which may be in the form of a powder or short fibres. As regards the absorbed gases, some may contain oxygen and others hydrogen. This use of absorbents allows the manufacture of highly sensitive explosives with a high detonation velocity by varying the $H_2/O_2$ ratio.

The advantage of this application is that a high detonation velocity and high energy release can be obtained simultaneously as the formation of water rapidly releases large amounts of heat and sufficient oxygen has been incorporated to ensure that all the carbon is burnt.

Finally, stage 3 can contain a chemical conventional secondary explosive whose action will be reinforced by the fact that a hole has previously been made in the surface of the target by the explosion of stage 2


## V. DESCRIPTION OF THE FIGURES

Figure 1.- Distribution of fibres in threats showing the inter-fibre spaces

(1) Absorbent material manufactured in the form of a fibre
(2) Empty space between two adjoining fibres

Figure 2.- Hydrogen accumulator with absorbent bed

(1) Collector channel
(2) Bed of absorbent material
(3) Accumulation chamber
(4) Exit
(5) Separator manufactured from sheet steel with numerous perforations

Figure 3.- Propellant grain reinforced with absorbent carbonaceous fibres

(1) Propellant matrix
(2) Carbonaceous fibres with absorbed gases
(3) Nozzle for the expulsion of the combustion gases

Figure 4.- Incorporation of a porous absorbent body into a three-sections projectile

(1) Contact detonator
(2) Section containing porous solid bed with absorbed gases

(3) Section containing conventional non-detonating high power explosive

PREFACE - The invention shown as "Storage of Hydrogen and Other Gases in Absorbent Solid Materials treated with Ionizing Radiations" is aimed to describe possible ways to improve the industrial manufacture of absorbent materials, as well as post - fabrication treatments for these materials in order to optimise their absorption capacity. The invention focuses on the particular case of Hydrogen.

The efficacy of the invention can be evaluated by comparing the absorbent capacities of two different materials, one of them "as manufactured" by the usual techniques and the other one after being treated according to the procedures shown in the invention, particularly the irradiation with ionizing radiations.

**Claims**

1. This patent is intended to describe a technique for improving the absorption and storage capacity of hydrogen and other gases in solid materials by giving them an adequate porosity.

   Once the solids have been properly prepared, an absorbent bed shall be made. This bed will be put into a container that must be able to withstand inner overpressures without damage or deterioration. The container should have an inlet / outlet valve for gasses.

   By putting the pressurized gas - preferably hydrogen - into the container, the absorption takes place and so the gas is stored. In order to recover the stored gas, the routine practice is to open the outlet valve and release it.

2. In relation to the solids that are mentioned in Claim First, it should be said that the absorbent capacity of any solid can be improved by using the treatment that is described in this patent. However, the solid must be able to resist the irradiation with penetrating radiations as described in Claims Fifth, Sixth and Seventh.

3. In relation to the absorbent solids that are mentioned in Claim Second, these solids should be fragmented until they can form a not very compact bed, somewhat as a rug. From now on, the term particle will be used to describe any minute portion of the material that makes up this bed, without any limitation in shape or size.

   Although particles can have any shape (powder, flakes, platelets quasi - spherical grains and so on), filaments are most suitable when a quick intake and outtake of gas is aimed.

   The absorbent material should be fragmented as much as possible as long as the cost of the process remains reasonable. It is unnecessary to reach a nanomaterial particle size.

4. In relation to the absorbent solids that are mentioned in Claim Second and Claim Third, it should be said that although there is no limitation in the solid substances - amorphous or crystalline, with or without additives, organic or inorganic - that can be used as absorbents, according to the procedure described in Claims Fifth, Sixth and Seventh, the best results will be obtained in the case of metals, alloys and intermetallic compounds, polymers, polycyclic aromatic hydrocarbons and waxes, ceramics, cermets, metal oxides, graphites, amorphous carbons and carbons.

5. In relation to Claim Second, this invention takes advantage of the fact that the retention of gases in solids occurs when the gas molecules or ions are stored in nanopores or micropores of the matrix material. The technique described here basically consists in irradiating the solids with a penetrating radiation. In the interaction with the solid, the radiation produces structural defects that are big enough for a further filling with a minute portion of gas.

6. In relation to Claim Fifth, irradiation can be performed by putting the material that is being treated into a flow of thermal or slow neutrons in a nuclear reactor. Once irradiated, the gas absorption capacity of the material is proportional to the dose of radiation that has been absorbed. A proper dose is the dose that is needed to cause a damage of up to .5 dpa (displacement per atom). Further doses will not improve the storage capacity of the absorbent.

7. In relation to Claim Fifth, another type of valid irradiation can be carried out by exposing the material to the radiation emitted by any industrial radioisotope. All of them are valid but $^{60}_{27}Co$ , $^{152}_{63}Eu$ , $^{134}_{55}Cs$ , $^{137}_{55}Cs$ , $^{192}_{77}Ir$ , and $^{170}_{69}Tm$ are the most suitable ones. The radioisotopes existing in nuclear wastes from large nuclear reactors can also be used for this purpose.

   Once irradiated, the gas absorption capacity of the material is proportional to the dose of radiation that has been absorbed, which can reach 10MGy (Mega Gray). Further doses will not improve the storage capacity of the absorbent.

8. In relation to Claim Sixth and Claim Seventh, the materials to be irradiated can be made by any of the particular procedures that are routinely used in their production.

However, the best manufacturing options are either a chemical deposition via gas (CVD) or a pyrolisis. Both processes allow the incorporation of additives to the main material. These additives can have favourable effects on the effectiveness of a further irradiation of the material.

**9.** In relation to Claim Eighth, there are three types of additives:

a) *additives that deform crystalline lattices,* which cause minute cavities when included in the material. These cavities appear to be appropriate for the accommodation of absorbed gases.

b) *additives that are very active with the incoming gases.* They play the role of catalysts in the chemiabsorption processes.

c) *additives that can be activated by the elementary particles or photons* that strike the material as the irradiation takes place according to Claims Sixth and Seventh. These additives are targets for a nuclear reaction that captures the photons or neutrons which enter the material. This leads to the production of a second generation of ionizing agents and a cascade of ionizing products that causes an additional damage to the cavities that appear after the primary irradiation.

One element can be included in more than one of these categories.

**10.** In relation to Claim Eighth, and in case of production via pyrolysis, the additives outlined in Claim Ninth can be incorporated into the absorbent material as salts that are added to the precursor organic material. After pyrolysis, the elements remain incorporated into the final absorbent material. In relation to Claim Eighth, and in case of production via gas decomposition, an additional gas should be added to the mixture of precursor gases that enter the reactor and produce the solid product. By additional gas we mean a gas that is not necessary for the production via CVD, but whose molecule is partially composed by a chemical ingredient that is interesting as an additive.

The additional gas decomposes in the reactor and yields an addendum with additional benefits.

It is also possible to bubble the mixture of precursor gases that are involved in the production of the absorbent material into a concentrated aqueous or alcoholic solution of a salt. In this way, a small amount of salt is dragged and reaches the reactor furnace, where it is decomposed, leaving its metal ion incorporated to the solid that is produced.

**11.** In relation to Claim Ninth, the additives listed are:

*a) deforming additives,* which are elements having either small atoms or, conversely, large atoms.

Li, Be, B, C, N, O and F are included in the group of additives with small atoms. Amongst the ones with large atoms, K, Ca, Ti, V, Cr, Mn, Fe, Co, Ni, Cu and Zn can be mentioned.

b) *additives that work as catalysts.* Pt, Pd, Ni, Co, Fe, Cr, V and Ti belong to this category.

c) *additives that are active for a nuclear reaction of capture.* B, N, S, Cl, Sr, Sn, Sm, Re, Si and Cd are some of the elements that are interesting as radiation captors. However, not every possible isotope is valid. There is an appropriate isotope for each element.

These additives are effective because they are able to react according to the following nuclear reactions:

$$^{10}B + {}^{1}n \rightarrow [{}^{11}B] \rightarrow {}^{7}Li + {}^{4}He + \gamma + 2.31\ MeV$$

$^{14}N(n,p)^{14}C$, $^{33}S(n,p)^{33}P$, $^{35}Cl(n,p)^{35}S$, $^{88}Sr(n,\gamma)^{89}Sr$, $^{116}Sn(n,\gamma)^{117}Sn$, $^{152}Sm(n,\gamma)^{153}Sm$, $^{185}Re(n,\gamma)^{186}Re$, $^{28}Si(n,p)^{28}Al$, o $^{113}Cd(n,\gamma)$

**12.** In relation to Claims Eighth to Eleventh, the materials so produced should be subjected to irradiation according to Claims Sixth and Seventh. Moreover, there is a further improvement - which is not indispensable - that consists in enhancing the surfacial activity. This allows a more rapid adsorption of the gas by the absorbent. Subsequently, some of the gas that is adsorbed on the surface is afterwards transferred into the material.

The activation depends on whether the gas to be adsorbed is hydrogen or another gas with larger molecules.

In the particular case of hydrogen, the best treatment is an immersion at room temperature - for twelve hours at most - in a concentrated solution of an inorganic acid. This acid may be nitric, hydrochloric, chromic, sulphuric or, even better, aqua regia, that is to say, one third of concentrated nitric acid and two thirds of concentrated hydrochloric acid. In order to achieve a better absorption of larger gas molecules (oxygen is an excellent example), an alkaline etching should be carried out. For this etching, a concentrated aqueous solution of an alkaline compound such as LiCl., NaCl, KCl, LiNO$_3$, NaNO$_3$, KNO$_3$, LiOH, NaOH, KOH, K$_2$CO$_3$, Na$_2$CO$_3$, KOH y ZnCl$_2$., is prepared.

After an immersion at room temperature - one to six hours -, water is drained and the product is dried at slightly above 100° C. Finally, the product is calcined at a temperature between 350 and 950° C, with an atmospheric pressure - under moderate vacuum is optional - and in an inert atmosphere (nitrogen or argon). The calcination should take between 2 and 12 hours. Finally, the material is rinsed in water and dried.

13. The absorbent material should be made and irradiated according to Claims Sixth and Seventh. It may also be subjected to the optional activations listed in Claim Twelfth. Then, the absorbent will be charged with gas.
In order to be charged, the material should be put into a pressurized atmosphere for less than twenty four hours. The higher the boost pressure, the greater the amount of gas that is absorbed. However, this increase in the absorption does not take place beyond a certain pressure. Hydrogen is harder to absorb because the defects / cavities that house the gas molecules are nanometer size. In this case, the maximum boost pressure is 300 bar. Other gases can be housed in larger micro - cavities and therefore do not need as much pressure as hydrogen to accommodate, especially if the surface of the absorbent has been previously treated by alkaline activation.

14. - In relation to Claim Thirteenth, and in order to complete it, we ought to say that both the absorption and desorption can take place at room temperature. However, the capacity of the absorbent to store gas can be  improved if the charge occurs in a cold atmosphere (liquid nitrogen, air liquid or dry carbon dioxide). Also, the discharge is quicker if it takes place in a temperature between 150 and 450° C.

15. Regardless whether the improvement described in Claim Fourteenth is used, there is one more way - which is optional - to increase the storage capacity of the material. When the absorbent material is put into either an electric or a magnetic field, the adsorption process is favoured. The electric field can be of up to $5 \cdot 10^{10}$ V/m (Volt·metro$^{-1}$). The magnetic field may be of up to 2 T (Teslas).

16. In relation to Claims Fifth to Fifteenth, once the gas molecules have been absorbed there is an additional possibility. The absorbent particles may be released from the pressurized chamber and put into the environmental conditions of 1 atmosphere and 25° C. In this way, particles retain some of the gas they have absorbed and afterwards they can be handled as a dry gas carrier.

17. In relation to Claim Sixteenth, we would like to describe one more possibility for absorbent materials so treated. One single material can absorb more than one gas just by immersing this material into a high pressure atmosphere with a mixture of gases.
However, it is preferable to make a weighed mixture of absorbent particles,
each type of particle having one gas previously absorbed. In this way, the absorbent bed is ready to outgive a mixture of gases in the proper proportion, so that it can react in an interesting way from a practical point of view.

**Figure 1**

**Figure 2**

EP 2 659 963 A1

**Figure 3**

17

**Figure 4**

# INTERNATIONAL SEARCH REPORT

| | |
|---|---|
| International application No. | |
| PCT/ES2010/000535 | |

A. CLASSIFICATION OF SUBJECT MATTER

**See extra sheet**

According to International Patent Classification (IPC) or to both national classification and IPC

B. FIELDS SEARCHED

Minimum documentation searched (classification system followed by classification symbols)
B01J, C01B, B01D

Documentation searched other than minimum documentation to the extent that such documents are included in the fields searched

Electronic data base consulted during the international search (name of data base and, where practicable, search terms used)

EPODOC, INVENES, WPI, XPESP

C. DOCUMENTS CONSIDERED TO BE RELEVANT

| Category* | Citation of document, with indication, where appropriate, of the relevant passages | Relevant to claim No. |
|---|---|---|
| A | WO 2008076076 A1 (AGENCY SCIENCE TECH & RES ET AL.) 26/06/2008, page 3, line 29 - page 5, line 14. | 1-17 |
| A | US 2008277380 A1 ( CHRISTENSON JOHN C ET AL.) 13/11/2008, paragraph[28]; paragraphs[38 - 39]. | 1-17 |
| A | US 2004016769 A1 (REDMOND SCOTT D ) 29/01/2004, paragraphs[96 - 98]; paragraphs[110 - 113]. | 1-17 |
| A | 06.03.2002, MONTHIOUX, M. "Filling single-wall carbon nanotubes". Carbon 40 (2002) 1809-1823. | 1-17 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 01/09/2011 | **(06/09/2011)** |

| Name and mailing address of the ISA/ | Authorized officer |
|---|---|
| OFICINA ESPAÑOLA DE PATENTES Y MARCAS Paseo de la Castellana, 75 - 28071 Madrid (España) | B. Aragón Urueña |
| Facsimile No.: 91 349 53 04 | Telephone No. 91 3493277 |

Form PCT/ISA/210 (second sheet) (July 2009)

## INTERNATIONAL SEARCH REPORT

Information on patent family members

International application No.

PCT/ES2010/000535

| Patent document cited in the search report | Publication date | Patent family member(s) | Publication date |
|---|---|---|---|
| WO2008076076 A | 26.06.2008 | US2010135899 A | 03.06.2010 |
| US2008277380 A | 13.11.2008 | US7833428 B | 16.11.2010 |
| US2004016769 A | 29.01.2004 | WO03078252 A | 25.09.2003 |
| | | AU2003218237 A | 29.09.2003 |
| | | US2003234010 A | 25.12.2003 |
| | | WO2004001205 A | 31.12.2003 |
| | | AU2003256303 A | 06.01.2004 |
| | | US2004009121 A | 15.01.2004 |
| | | US7011768 B | 14.03.2006 |
| | | US2004023087 A | 05.02.2004 |
| | | US7169489 B | 30.01.2007 |
| | | WO2004024845 A | 25.03.2004 |
| | | AU2003272269 A | 30.04.2004 |
| | | US2004094134 A | 20.05.2004 |
| | | WO2004108590 A | 16.12.2004 |
| | | AU2003304179 A | 04.01.2005 |
| | | US2007259220 A | 08.11.2007 |
| | | US7399325 B | 15.07.2008 |

Form PCT/ISA/210 (patent family annex) (July 2009)

**INTERNATIONAL SEARCH REPORT**

| International application No. |
| --- |
| PCT/ES2010/000535 |

CLASSIFICATION OF SUBJECT MATTER

*B01J20/00* (2006.01)
*C01B3/00* (2006.01)
*B01D53/14* (2006.01)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007064942 A1
- US 6773689 B1
- US 6290753 B1
- US 20050075245 A1
- UA 20040807084 U
- UA 9026 U
- WO 2006094531 A1
- US 5020439 A
- US 007025840 B1

**Non-patent literature cited in the description**

- **O.A. ROSYID ; D. JABLONSKY ; U. HAUPT-MANNS.** *Int. J. Hydrogen Energy,* 2007, vol. 32, 3194-3200
- **G. M. PSOFOGIANNAKIS ; G. E. FROUDAKIS.** *J. Phys. Chem C,* 2009, vol. 113, 14908-14915
- **B.SAKINTUNA ; F. L. LAMARI-DARKRIM ; M. HIRSCHER.** *Int. J. Hydrogen Energy,* 2007, vol. 32, 1121-1140
- **J.L.C. ROWSELL ; O.M. YAGHI.** *Angew. Chem. Int. Ed.,* 2005, vol. 44, 4670-4679
- **J. WEITKAMP ; M. FRITZ ; S. ERNST.** *Int. J. Hydrogen Energy,* 1995, vol. 20 (12), 967-970
- **E. BRUNET ; HH.M.H.ALHENDAWI ; C. CERRO ; M.J. DE LA MATA ; O. JUANES ; J.C. RODRIGUEZ-URBIS.** *Angew. Chem. Int. Ed.,* 2006, vol. 45, 6918-6920
- **N. MIYAJIMA ; S. UCHIDA ; T. SUZUKI ; H. SAKANE.** *Mater Sci Eng B,* 2008, vol. 148, 249-252
- **J. HAYASHI ; A. KAZEHAYA ; K. MUROYAMA ; A.P. WATKINSON.** *Carbon,* 2000, vol. 38, 1873-1878
- **C.-H. CHEN ; C.-C. HUANG.** *Sep Purif Technol,* 2009, vol. 65, 305-310
- **R. GADIOU ; S. E. SAADALLAH ; T. PIQUERO ; P. DAVID ; J. PARMENTIER ; C. VIX-GUTERL.** *Mic. Mes. Mater.,* 2005, vol. 79, 121-128
- **A. REJIFU ; H. NOGUCHI ; T. OHBA ; H. KANOH ; F. RODRIGUEZ REINOSO ; K. KANEKO.** *Adsorpt Sci Technol,* 2009, vol. 27 (9), 877-881
- **L. CHEN ; A.,C. COOPER ; G. P. PEZ ; H. CHENG.** *J. Phys. Chem. C,* 2007, vol. 111, 18995-19000
- **C. LIU ; Y.Y. FAN ; M. LIU ; H.T. CONG ; H.M. CHENG ; M.S. DRESSELHAUS.** *Science,* 1999, vol. 286, 1127-1129
- **B. KUCHTA ; L. FIRLEJ ; S. ROSZAK ; P. PFEIFER.** *Adsorption,* 2010, vol. 16, 413-421
- **Y. OHKAWARA ; S, OHSHIO ; T. SUZUKI ; K. YATSUI ; H. ITO ; H. SAITOH.** *Jpn. J. Appl. Phys.,* 2002, vol. 41 (12), 7508-7509
- **S. A. DASTGHEIB ; T. KARANFIL.** *J Colloid Interface Sci,* 2004, vol. 274, 1-8
- **X. LI ; J.-Y. HWANG ; S. SHI ; X. SUN ; Z. ZHANG.** *Carbon,* 2010, vol. 48, 876-880
- **W. LIU ; Y. H. ZHAO ; Y. LI ; E. J. LAVERNIA ; Q. JIANG.** *Phys Chem Chem Phys,* 2009, vol. 11, 9233-9240
- **S. OZEKI ; J. MIYAMOTO ; S. ONO ; C. WAKAI ; T. WATANABE.** *J. Phys. Chem.,* 1996, vol. 100, 4205-4112
- **H. UCHIYAMA ; K. KANEKO ; S. OZEKI.** *Langmuir,* 1992, vol. 8, 624-629
- Fundamentals of Adsorption. **S. OZEKI ; J. MIYAMOTO ; S. ONO.** Magnetic field effect on water adsorption. Public Academic Publishers, 1996, 717-723
- **P. SZROEDER ; A. CHRUSCINSKA ; K. PRZEGIETKA ; S. KULESZA.** *Energy Convers Manage,* 2008, vol. 49, 2494-2498
- **F. CATALDO.** *Carbon,* 2000, vol. 38, 634-637
- **M. HULMANA ; V. SKÁLAKOVÁ ; S. ROTH ; H. KUZMANY.** *J. Appl. Phys.,* 2005, vol. 98, 024311
- **D. H. GALVÁN ; I. L. GARZÓN ; P. SANTIAGO ; M. J. YACAMÁN.** *Full Sci Techn,* 1998, vol. 6 (5), 867-883
- **S. POSPISIL ; C. GRANJA.** *AIP Conference Proceeding (Nuclear Physics,* 2010, vol. 1204, 12-16
- **VIRGIL'EV, YU. S. ; KALYAGINA, I. P. ; PEKAL'N T.K. ; SHRURSHAKOVA, T. N.** *Soviet Atomic Energy,* 1975, vol. 38 (5), 390-395
- **R. L. POWELL ; P. WAGNER.** *Carbon,* 1970, vol. 8, 690-692
- **T. MARUYAMA ; M. HARAYAMA.** *J. Nucl. Mater.,* 1992, vol. 195, 44-50

- **L. L. SNEAD ; T. D. BURCHELL.** *J. Nucl. Mater.,* 1995, vol. 224, 222-229
- **H.L. HEINISCH ; L.R. GREENWOOD ; W.J. WEBER ; R.E. WILLIFORD.** *J. Nucl. Mater.,* 2004, vol. 327, 175-181
- **J. P. BIERSACK ; L. G. HAGGMARK.** *Nucl Instr and Meth,* 1980, vol. 174, 257-269
- **H. ATSUMI.** *Phy Scr.,* 2003, vol. T103, 77-80
- **R. HU ; T. C. CHUNG.** *Carbon,* 1996, vol. 34 (10), 1181-1190
- **J. MACHNIKOWSKI ; B. GRZYB ; J.V. WEBER ; E. FRACKOWIAK ; J.N. ROUZAUD ; F. BÉGUIN.** *Electrochim Acta,* 2004, vol. 49, 423-432
- **K.L. CHOY.** *Prog Mater Sci,* 2003, vol. 48, 57-170
- **P.W. MAY ; N.M. EVERITT ; C.G. TREVOR ; M.N.R. ASHFOLD ; K.N. ROSSER.** *Appl Surf Sci,* 1993, vol. 68, 299-305
- **D.K. MISHRA ; JYH-MING TING.** *Diam Rel Mater.,* 2008, vol. 17, 598-601
- **T. SHIRASAKI ; A. DERRE ; M. MENETRIER ; A. TRESSAUD ; S. FLANDROIS.** *Carbon,* 2000, vol. 38, 1461-1467
- **R. ERZ ; W. DÖTTER ; K. JUNG ; H. EHRHARDT.** *Diam Rel Mater,* 1995, vol. 4, 469-472
- **H. E. CARLTON ; J. H. OXLEY.** *A. I. Ch. E. Journal,* 1967, vol. 13 (1), 86-90
- **R. G. CHARLES ; P. G. HAVERLACK.** *J Inorg Nucl Chem,* 1969, vol. 31, 995-1005
- **A. L. CABRERA ; J. F. KIRNER.** *Surf. Coat. Tech.,* 1989, vol. 39/40, 43-51
- **B. J. WOOD ; A. SANJURJO ; G. T. TONG ; S. E. SWIDER.** *Surf. Coat. Tech,* 1991, vol. 49, 228-232